# EUROPÄISCHE PATENTSCHRIFT

(11) **EP 4 407 350 B1**
(45) Veröffentlichungstag und Bekanntmachung des Hinweises auf die Patenterteilung: **29.04.2026**
(21) Anmeldenummer: 23153608.7
(22) Anmeldetag: 27.01.2023
(51) Int. Cl.: G01T 1/20

(54) **STRAHLUNGSDETEKTOR UND VERFAHREN ZU SEINER VERWENDUNG**
RADIATION DETECTOR AND METHOD OF USING THE SAME
DÉTECTEUR DE RAYONNEMENT ET MÉTHODE D'UTILISATION

(43) Veröffentlichungstag der Anmeldung: 31.07.2024
(73) Patentinhaber: Fraunhofer-Gesellschaft zur Förderung der angewandten Forschung e.V., 80686 München (DE); The University of Sheffield, Sheffield S10 2TN (GB); TECH HIVE LABS ASTIKI MI KERDOSKOPIKI ETAIREIA, 15231 Halandri (GR); Optoelectronica - 2001 SA, Magurele 077125, Ilfov county (RO)
(72) Erfinder: SCHADE, Wolfgang, 38640 Goslar (DE); ANGELMAHR, Martin, 38640 Goslar (DE); KOCH, Jannis, 38640 Goslar (DE); ASFIS, Georgios, Chalandri 152 32 (GR); PANAGOPOULOS, Nikolaos, Chalandri 152 32 (GR); MARINOS, Nikolaos, Chalandri 152 32 (GR); CHATZAKOS, Panagiotis, Chalandri 152 32 (GR); STOICA, Adrian, 077125 Magurele, Ilfov County (RO); ENUICA, Alexandra, 077125 Magurele, Ilfov County (RO); COMANESCU, Brindus, 077125 Magurele, Ilfov County (RO); ANASTOPOULOS, Christos, Sheffield S3 7RH (GB); LOHWASSER, Kristin, Sheffield S3 7RH (GB); WILBUR, Scott, Sheffield S3 7RH (GB)
(74) Vertreter: Friese Goeden Patentanwälte PartGmbB

(56) Entgegenhaltungen:
- EP-A1- 3 667 371
- US-A1- 2005 205 794
- US-A1- 2014 357 988
- WILBUR S ET AL: "Flexible X-ray imaging detectors using scintillating fibers", 20221013, vol. 17, no. 10, 13 October 2022 (2022-10-13), XP020433986, DOI: 10.1088/1748-0221/17/10/C10013
- LI XU ET AL: "Dual-layer orthogonal fiber Bragg grating mesh based soft sensor for 3-dimensional shape sensing", OPTICS EXPRESS, vol. 25, no. 20, 28 September 2017 (2017-09-28), pages 24727 - 24734, XP055458601, DOI: 10.1364/OE.25.024727

## Beschreibung

Die Erfindung betrifft einen Strahlungsdetektor mit zumindest einer Strahlungserfassungseinrichtung und mit zumindest einem flächigen Träger, auf welchem die Strahlungserfassungseinrichtung befestigt ist, wobei der flächige Träger in zumindest einer Raumrichtung flexibel ist und eine Formerfassungseinrichtung enthält, welche dazu eingerichtet ist, die Form des Trägers zu erfassen. Weiterhin betrifft die Erfindung ein Verfahren zur Erfassung von Strahlung mit einem solchen Strahlungsdetektor.

Aus der Praxis sind Röntgendetektoren bekannt, welche aus einer Szintillatorschicht und einer Photodiode bestehen. Die Szintillatorschicht wandelt Röntgenstrahlung in sichtbares Licht um, welches von der Photodiode in elektrische Signale gewandelt und hierdurch nachgewiesen werden kann. Diese Röntgendetektoren haben den Nachteil, dass diese stets eben ausgeführt sind. Gekrümmte Detektoren, welche für einige Aufgaben vorteilhaft sind, können auf diese Weise nicht hergestellt werden.

Aus Büchele, P., Richter, M., Tedde, S. et al. X-ray imaging with scintillator-sensitized hybrid organic photodetectors, Nature Photon 9, 843-848 (2015) ist zur Lösung dieses Problems bekannt, als Szintillator keramische Partikel zu verwenden und diese in einen leitfähigen Kunststoff einzubetten. Der leitfähige Kunststoff wandelt das vom Szintillator ausgehende Licht in elektrische Signale um, welche eine analoge oder digitale Auswertung und Speicherung der Bilddaten ermöglichen. Anders als Photodioden aus Silizium ist das leitfähige Kunststoffmaterial flexibel, sodass die solchermaßen hergestellten Strahlungsdetektoren auch gekrümmt werden können. Nachteilig ist jedoch, dass die Form des Strahlungsdetektors bei freier Beweglichkeit unbekannt ist. Hierdurch entstehen Bildverzerrungen auf dem zweidimensionalen Detektor und die Messdaten können nur unzulänglich ausgewertet und interpretiert werden. Der bekannte Strahlungsdetektor muss somit wiederum auf eine Oberfläche mit bekannter Geometrie aufgelegt werden, um die Entfaltung bzw. Entzerrung der Bilddaten zu ermöglichen.

Aus S. Wilbur et al.: Flexible X-ray imaging detectors using scintillating fibers. JINST 17 (2022) C10013 ist ein Röntgenbilddetektor bekannt. Dieser kann hochauflösende Bilder erzeugen und ist flexibel genug, um ein Bild auf einer gekrümmten Oberfläche zu erzeugen. Weiterhin ist der bekannte Röntgenbilddetektor in der Lage, seine endgültige Form selbst zu erkennen.

In der US 2005/0205794 A1 wird ein Gerät offenbart, das in der Lage ist, direkt und effizient Oberflächenkontaminationen von zu messenden Objekten mit gekrümmten Oberflächen zu messen. Das Messgerät umfasst einen Radioaktivitätsdetektionsabschnitt, welcher eine Struktur aufweist, in der eine Vielzahl von länglichen, plattenförmigen Detektionseinheiten angeordnet und durch Verbindungsstücke lösbar miteinander verbunden sind.

Die US 2014/357988 A1 betrifft eine Sensorvorrichtung zum Erfassen einer an der Sensorvorrichtung empfangenen Strahlungsdosis, wobei die Sensorvorrichtung einen flexiblen Körper und eine optische Formerfassungsvorrichtung umfasst.

Die EP 3 667 371 A1 offenbart das Biegen eines flexiblen Röntgendetektors zum Abbilden einer gekrümmten Struktur oder eines gekrümmten Objekts und die Korrektur der durch das Biegen erzeugten Bildverzerrung.

Li Xu, Jia Ge, Jay H. Patel, und Mable P. Fok: Dual-layer orthogonal fiber Bragg grating mesh based soft sensor for 3-dimensional shape sensing. Optics Express Vol. 25, Issue 20 (2017) 24727-24734 offenbaren einen weichen Formsensor für die 3-dimensionale Messung der Objektform. Der vorgeschlagene Sensor basiert auf zweischichtigen Faser-Bragg-Gitter-Arrays mit einer orthogonalen Maschenstruktur, die eine bidirektionale Formabtastung an mehreren Punkten ermöglicht.

Ausgehend vom Stand der Technik liegt der Erfindung daher die Aufgabe zugrunde, einen Strahlungsdetektor anzugeben, welcher einerseits flexibel einsetzbar ist und andererseits eine einfache Auswertung der Bilddaten ermöglicht.

Die Aufgabe wird erfindungsgemäß durch einen Strahlungsdetektor gemäß Anspruch 1 und ein Verfahren nach Anspruch 8 gelöst. Vorteilhafte Weiterbildungen der Erfindung finden sich in den Unteransprüchen.

Der erfindungsgemäße Strahlungsdetektor weist zumindest eine Strahlungserfassungseinrichtung auf. Die Strahlungserfassungseinrichtung ist dazu eingerichtet und bestimmt, auftreffende Strahlung in elektrische Signale zu wandeln und diese elektrischen Signale zur Weiterverarbeitung bereitzustellen. Die Strahlungserfassungseinrichtung ist insbesondere flächig ausgebildet und weist in zumindest einer Raumrichtung eine Ortsauflösung auf. In einigen Ausführungsformen der Erfindung kann die Strahlungserfassungseinrichtung zweidimensional ortsauflösend sein und auf diese Weise den Ort auftreffender Strahlung innerhalb vorgegebener Auflösungsgrenzen bestimmen. In einigen Ausführungsformen der Erfindung kann die Strahlungserfassungseinrichtung zusätzlich zum Ort auch weitere Parameter wie die Energie und/oder die Masse und/oder die Intensität und/oder den Impuls eintreffender Strahlung erfassen, sodass ein zweidimensionales Bild der eintreffenden Strahlung entsteht. Die Strahlung kann in einigen Ausführungsformen der Erfindung ausgewählt sein aus elektromagnetischer Strahlung, beispielsweise Röntgenstrahlung oder γ-Strahlung oder sichtbarem Licht. In anderen Ausführungsformen der Erfindung kann der Strahlungsdetektor zur Erfassung von Teilchenstrahlung eingesetzt werden, beispielsweise α-Strahlung, β-Strahlung oder Myonen-Strahlung.

Weiterhin enthält der vorgeschlagene Strahlungsdetektor zumindest einen flächigen Träger, auf welchem die Strahlungserfassungseinrichtung befestigt ist. Der flächige Träger kann dabei in einigen Ausführungsformen der Erfindung die mechanische Stabilität des Strahlungsdetektors erhöhen und/oder die Beschädigung der Strahlungserfassungseinrichtung vermeiden. Der flächige Täger kann in einigen Ausführungsformen der Erfindung aus Metall oder Kunststoff oder Gummi bestehen. In einigen Ausführungsformen der Erfindung kann der flächige Täger ein Polymer enthalten oder daraus bestehen. In einigen Ausführungsformen der Erfindung kann der flächige Täger Polyethylen enthalten oder daraus bestehen.

Der flächige Träger ist in zumindest einer Raumrichtung flexibel. Dies kann beispielsweise dadurch realisiert werden, dass der flächige Träger aus einem flexiblen Material gefertigt wird und/oder eine geringe Dicke aufweist, sodass dieser biegsam ist. Insbesondere kann der flächige Träger elastisch verformbar und damit reversibel biegsam sein. In anderen Ausführungsformen der Erfindung kann der flächige Träger als Gliederband realisiert sein, d. h. einzelne Flächenelemente oder Streifen sind mittels Scharnieren, beispielsweise Filmscharnieren, miteinander befestigt, sodass eine relative Bewegbarkeit um die Verbindungsachse gegeben ist.

Erfindungsgemäß enthält der flächige Träger eine Formerfassungseinrichtung, welche dazu eingerichtet ist, die Form des Trägers zu erfassen. Die Formerfassungseinrichtung enthält zumindest einen ersten Wellenleiter, in welchen zumindest ein Bragg-Gitter eingebracht ist. Der als Formerfassungseinrichtung verwendete erste Wellenleiter ist in den flächigen Träger eingebettet.

Der zumindest eine Wellenleiter kann beispielsweise als Polymerfaser oder als Glasfaser realisiert sein. In anderen Ausführungsformen, die nicht unter den Schutzumfang der Ansprüche fallen, kann der zumindest eine Wellenleiter durch Drucken oder Lasermaterialbearbeitung hergestellt sein. Der Wellenleiter enthält zumindest einen Kern und einen den Kern umgebenden Mantel, sodass aufgrund des Unterschiedes der Brechzahl zwischen Kern und Mantel ein optisches Signal im Kern propagieren kann.

Erfindungsgemäß enthält der Wellenleiter weiterhin zumindest ein Bragg-Gitter. Das Bragg-Gitter besteht aus einer Mehrzahl von Raumbereichen bzw. Voxeln, welche einen im Vergleich zur Umgebung veränderten Brechungsindex aufweisen. An den Grenzflächen der Voxel wird eintreffende Strahlung teilweise reflektiert und teilweise transmittiert, sodass eintreffendes kohärentes Licht zur Interferenz kommt. Hierdurch wird eine bestimmte, vorgebbare Wellenlänge reflektiert und Licht anderer Wellenlänge transmittiert. Die Wellenlänge des reflektierten Lichtes hängt von der Gitterkonstanten des Bragg-Gitters ab. Eine Verformung des Wellenleiters bzw. des Längsabschnittes, in welchem das Bragg-Gitter eingebracht ist, führt zu einer Dehnung oder Stauchung und dadurch zu einer Veränderung der Gitterkonstanten. Die Veränderung der Gitterkonstanten kann durch die Änderung der Wellenlänge des reflektierten oder transmittierten Lichtes nachgewiesen werden. Auf diese Weise kann die Krümmung des flexiblen Trägers am Ort des Bragg-Gitters erfasst werden. Mit einer Mehrzahl von Wellenleitern, in welchen eine Mehrzahl von Bragg-Gittern eingebracht ist, kann auf diese Weise die Form des flächigen Trägers des Strahlungsdetektors mit hoher Genauigkeit erfasst werden.

Der erfindungsgemäße Strahlungsdetektor erlaubt es somit erstmals, unmittelbar vor Durchführung einer Messung in eine in weiten Grenzen frei wählbare Form gebracht zu werden, welche dann zusammen mit den Messdaten der Strahlungserfassungseinrichtung bestimmt werden kann. Sodann können die Messdaten der Strahlungserfassungseinrichtung mit den Messdaten der Formerfassungseinrichtung korrigiert bzw. entzerrt werden. Der vorgeschlagene Strahlungsdetektor kann dabei insbesondere auch in komplexen Freiformen eingesetzt werden, welche nach dem Stand der Technik nur schwer realisiert werden können.

In einigen Ausführungsformen der Erfindung kann der flächige Träger in zwei Raumrichtungen flexibel sein, beispielsweise in Form einer dünnen Kunststofffolie. Dies erlaubt eine besonders flexible Anpassung an unterschiedliche Messaufgaben.

In einigen Ausführungsformen der Erfindung kann der erste Wellenleiter in einer neutralen Faser des flächigen Trägers eingebettet sein. Auf diese Weise wird vermieden, dass der erste Wellenleiter unzulässigen mechanischen Spannungen ausgesetzt wird. Eine Änderung der aus den Bragg-Gittern ausgelesenen Messwerte kann somit eindeutig einer Formänderung zugeschrieben werden und von einwirkenden mechanischen Kräften bzw. mechanischen Spannungen unterschieden werden.

In einigen Ausführungsformen der Erfindung kann der erste Wellenleiter außerhalb einer neutralen Faser des flächigen Trägers eingebettet sein. Hierdurch kann die Verformung des ersten Wellenleiter vergrößert sein, so dass die Sensitivität der Formerfassungseinrichtung erhöht sein kann.

Erfindungsgemäß ist der erste Wellenleiter in einem Hohlraum des flächigen Trägers gleitend geführt. Dies vermeidet das Auftreten unzulässig hoher mechanischer Spannungen, sodass die Form des flächigen Trägers mit größerer Genauigkeit erfasst werden kann.

In einigen Ausführungsformen der Erfindung kann der Hohlraum zur Außenkontur des ersten Wellenleiters komplementär geformt sein. Hierdurch kann der erste Wellenleiter spielfrei geführt sein, sodass dieser zuverlässig in der neutralen Faser des flächigen Trägers verläuft und gleichwohl gleitend geführt ist und die Krümmung des Trägers annimmt.

In einigen Ausführungsformen der Erfindung kann die Strahlungserfassungseinrichtung eine Mehrzahl zweiter optischer Wellenleiter enthalten, welche optional zumindest teilweise mit einem Szintillator versehen sind. Der Szintillator kann dabei in einen Hohlraum des zweiten Wellenleiters eingebracht oder auf eine Außenfläche des zweiten Wellenleiters aufgebracht werden. Eintreffende Strahlung wird vom Szintillator in sichtbares Licht gewandelt, welches nachfolgend im zweiten Wellenleiter propagiert und an dessen Ende in an sich bekannter Weise nachgewiesen wird, beispielsweise mittels einer Photodiode. Durch eine Mehrzahl parallel angeordneter Wellenleiter kann eine Ortsauflösung in einer Raumrichtung erzielt werden. Durch mehrlagige, insbesondere gekreuzte Anordnung einer Mehrzahl zweiter Wellenleiter kann der Ort eines Strahlungsereignisses in zwei Raumrichtungen ortsaufgelöst und damit punktgenau erfasst werden. Durch die Erfassung der Strahlung mittels der zweiten Wellenleiter kann vermieden werden, elektronische Komponenten unmittelbar der Strahlung auszusetzen. Hierdurch kann die Zuverlässigkeit und/oder die Lebensdauer elektronischer Komponenten verlängert sein.

In einigen Ausführungsformen der Erfindung enthält der Strahlungsdetektor weiterhin eine Auswerteeinrichtung, welcher Signale der Strahlungserfassungseinrichtung und der Formerfassungseinrichtung zuführbar sind und welche dazu eingerichtet ist, die durch die Krümmung des flächigen Trägers hervorgerufenen Signalfehler zu korrigieren. Hierdurch wird die Anwendung des erfindungsgemäßen Strahlungsdetektors vereinfacht, weil der Benutzer stets ein entzerrtes Bild präsentiert bekommt, welches sich vom Bild eines ebenen Detektors nicht unterscheidet. Da die Erfassung der tatsächlichen Form des Strahlungsdetektors automatisiert im Hintergrund abläuft, muss sich der Benutzer mit der exakten Positionierung oder exakten Formgebung des Strahlungsdetektors nicht weiter beschäftigen.

In einigen Ausführungsformen der Erfindung kann die Form des flächigen Trägers durch ein neuronales Netz oder durch geometrische Interpolation bestimmt werden. Zur Erzeugung von Trainingsdaten eines neuronalen Netzes kann der flächige Träger in eine Vielzahl unterschiedlicher Formen gebracht werden, welche unabhängig von der Formerfassungseinrichtung erfasst wird, beispielsweise durch kamerabasierte Verfahren. Die so erfasste Form kann mit den optischen Messwerten der Formerfassungseinrichtung korreliert werden, sodass die Formerfassungseinrichtung nach hinreichendem Training auch bislang unbekannte Formen des flächigen Trägers zuverlässig bestimmen kann.

In einigen Ausführungsformen der Erfindung kann der Strahlungsdetektor auch für Messungen an schwer zugänglichen Orten eingesetzt werden, indem dieser gerollt oder gefaltet durch eine Öffnung zum eigentlichen Messort transportiert und am Messort entfaltet oder entrollt wird. Dabei ist unbeachtlich, ob der Strahlungsdetektor am Messort tatsächlich vollständig plan aufliegt, da die erhaltenen Messwerte mit der gleichzeitig erfassten Form des Strahlungsdetektors entzerrt bzw. korrigiert werden können.

In einigen Ausführungsformen der Erfindung kann der Strahlungsdetektor an die Form eines Messobjektes angepasst werden. Beispielsweise kann der Strahlungsdetektor an ein Messobjekt angelegt oder in ein Messobjekt eingelegt werden. Beispielsweise in der zerstörungsfreien Materialprüfung kann damit gleichzeitig die Form und die Wandbeschaffenheit eines Messobjektes erfasst werden oder die Messdaten der Wandbeschaffenheit können mit einem Ort auf der Oberfläche des Messobjektes korreliert werden.

Der Strahlungsdetektor bzw. der flächige Träger kann in einigen Ausführungsformen der Erfindung eine Länge bzw. eine Breite zwischen etwa 10 cm und etwa 100 cm oder zwischen etwa 50 cm und etwa 200 cm aufweisen. Damit eignet sich der erfindungsgemäße Strahlungsdetektor gleichermaßen für Anwendungen in der medizinischen Bildgebung oder der Qualitätssicherung von Fertigungsprozessen oder der Untersuchung technischer Geräte nach Schadensfällen oder in der Archäologie.

Nachfolgend soll die Erfindung anhand von Figuren ohne Beschränkung des allgemeinen Erfindungsgedankens näher erläutert werden. Dabei zeigt
- Figur 1: den erfindungsgemäßen Strahlungsdetektor in perspektivischer Darstellung.
- Figur 2: zeigt den erfindungsgemäßen Strahlungsdetektor im Schnitt.
- Figur 3: erläutert den Querschnitt des erfindungsgemäßen Strahlungsdetektors.
- Figur 4: zeigt die Flexibilität des erfindungsgemäßen Strahlungsdetektors.
- Figur 5: zeigt die Verwendung des erfindungsgemäßen Strahlungsdetektors in einem ersten Ausführungsbeispiel.
- Figur 6: zeigt die Anwendung des erfindungsgemäßen Strahlungsdetektors in einem zweiten Ausführungsbeispiel.

Gleiche Bestandsteile der Erfindung sind mit gleichen Bezugszeichen versehen, sodass nicht sämtliche Details in Verbindung mit jeder Figur erneut vollständig beschrieben werden.

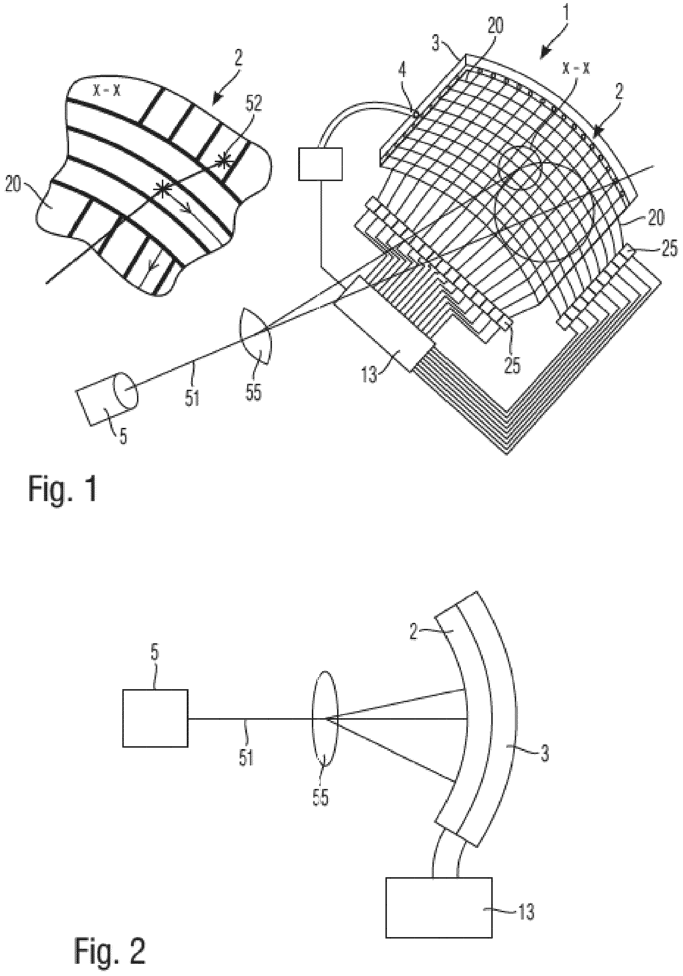

Anhand der Figuren 1 und 2 wird der vorgeschlagene Strahlungsdetektor 1 und dessen Verwendung näher erläutert. Wie aus Figur 1 und Figur 2 ersichtlich ist, wird eine Materialprobe 55 mit dem erfindungsgemäßen Strahlungsdetektor 1 untersucht. Die Materialprobe 55 kann beispielsweise ein menschlicher oder tierischer Körper sein. In anderen Ausführungsformen der Erfindung kann die Materialprobe 55 einen technischen Gegenstand enthalten, beispielsweise ein Industrieprodukt, ein Bauwerk, ein Halbzeug oder jedes andere, an sich bekannte Material, welches mit Strahlung 51 aus einer Strahlungsquelle 5 zerstörungsfrei untersucht werden soll.

Die Strahlungsquelle 5 kann eine an sich bekannte radioaktive Quelle sein, welche α- oder β- oder γ-Strahlung emittiert. In anderen Ausführungsformen der Erfindung kann die Strahlungsquelle 5 eine Röntgenröhre oder eine Synchrotron-Strahlungsquelle sein, welche Röntgenstrahlung emittiert. In wiederum anderen Ausführungsformen der Erfindung kann die Strahlungsquelle 5 auch sichtbares Licht emittieren. Im dargestellten Ausführungsbeispiel des Verfahrens ist die Materialprobe 55 für die Strahlung 51 zumindest teilweise transparent.

Der Strahlungsdetektor 1 befindet sich im Strahlengang hinter der Materialprobe 55, sodass transmittierte Strahlung 51 auf den Strahlungsdetektor 1 trifft. In anderen Ausführungsformen der Erfindung kann der Strahlungsdetektor 1 auch auf derselben Seite wie die Strahlungsquelle 5 angeordnet sein, sodass der Strahlungsdetektor 1 rückgestreute Strahlung nachweist.

Der Strahlungsdetektor 1 enthält eine Strahlungserfassungseinrichtung 2, welche im dargestellten Ausführungsbeispiel zweidimensional ortsauflösend ist. Es handelt sich somit um einen Detektor, welcher dazu eingerichtet und bestimmt ist, den Ort auftreffender Strahlung und optional weitere Parameter, wie beispielsweise die Intensität oder die Energie, zu erfassen.

Im dargestellten Ausführungsbeispiel enthält die Strahlungserfassungseinrichtung eine Mehrzahl parallel angeordneter zweiter Wellenleiter 20, welche optional jeweils mit einem Szintillator versehen sind. Der Szintillator ist dazu eingerichtet und bestimmt, die eintreffende Strahlung 51 in sichtbares Licht zu wandeln. Dieses sichtbare Licht propagiert in den zweiten Wellenleitern 20 zu jeweils einem zugeordneten Photodetektor 25. Der Photodetektor 25 wandelt das optische Signal in ein elektrisches Signal, welches nachfolgend einer Auswerteeinrichtung 13 zugeführt wird.

Wie aus Figur 1 ersichtlich ist, sind die zweiten Wellenleiter 20 in zwei Lagen angeordnet, wobei die zweiten Wellenleiter 20 einer Lage jeweils parallel zueinander verlaufen und die Wellenleiter zweier unterschiedlicher Lagen orthogonal zueinander verlaufen. Auf diese Weise kann in jeder Lage der Ort eindimensional bestimmt werden. Im Zusammenwirken beider Lagen ergibt sich eine punktgenaue Erfassung des Ortes 52 der Wechselwirkung.

Die Strahlungserfassungseinrichtung 2 ist auf einem flächigen Träger 3 angeordnet, welcher in zumindest einer Raumrichtung flexibel ist. In einigen Ausführungsformen der Erfindung kann der flächige Träger 2 in zwei Raumrichtungen flexibel sein. Auf diese Weise kann der flächige Träger 3 und damit die Strahlungserfassungseinrichtung 2 gekrümmt werden, beispielsweise um den Strahlungsdetektor an eine Außen- oder Innenkontur der Materialprobe 55 anzupassen. Der flächige Träger kann dabei aus einer flexiblen Polymerlage bestehen, um eine hinreichende Beweglichkeit zu ermöglichen. Die zweiten Wellenleiter 20 der Strahlungserfassungseinrichtung 2 können mittels eines Einbettungsmaterials bzw. einer Vergussmasse auf dem flächigen Träger befestigt werden. Als Einbettungsmaterial kann in einigen Ausführungsformen der Erfindung ein Ethylen-Vinylacetat-Copolymer oder ein Silikon verwendet werden.

Aus der Krümmung des Strahlungsdetektors 1 erwächst das Problem, dass die Abbildung der Strahlungserfassungseinrichtung 2 verzerrt wird. Zur Entzerrung des von der Strahlungserfassungseinrichtung 2 aufgenommenen Bildes ist somit die Kenntnis der Form des flächigen Trägers 3 und damit der Strahlungserfassungseinrichtung 2 vorteilhaft. Hierzu enthält der flächige Träger 3 eine Formerfassungseinrichtung 4. Erfindungsgemäß enthält die Formerfassungseinrichtung 4 eine Mehrzahl erster Wellenleiter 40, welche in den flächigen Träger 3 eingebettet sind. Die Wellenleiter 40 enthalten ihrerseits jeweils zumindest ein Bragg-Gitter. Die Gitterkonstante des Bragg-Gitters ändert sich durch Krümmung des Wellenleiters und damit durch Krümmung des flächigen Trägers 3. Die Gitterkonstante des Bragg-Gitters kann wiederum durch Erfassung des am Bragg-Gitter reflektierten oder transmittierten Lichtes erfolgen. Durch eine Vielzahl erster Wellenleiter, welche jeweils eine Mehrzahl von Bragg-Gittern enthält, kann die Form des flächigen Trägers 3 mit großer Genauigkeit und in mehreren Raumrichtungen erfasst werden.

Auch die die Form des flächigen Trägers 3 repräsentierenden Daten werden der Auswerteeinrichtung 13 zugeführt, sodass dort die durch die Krümmung bedingten Bildverzerrungen korrigiert werden können.

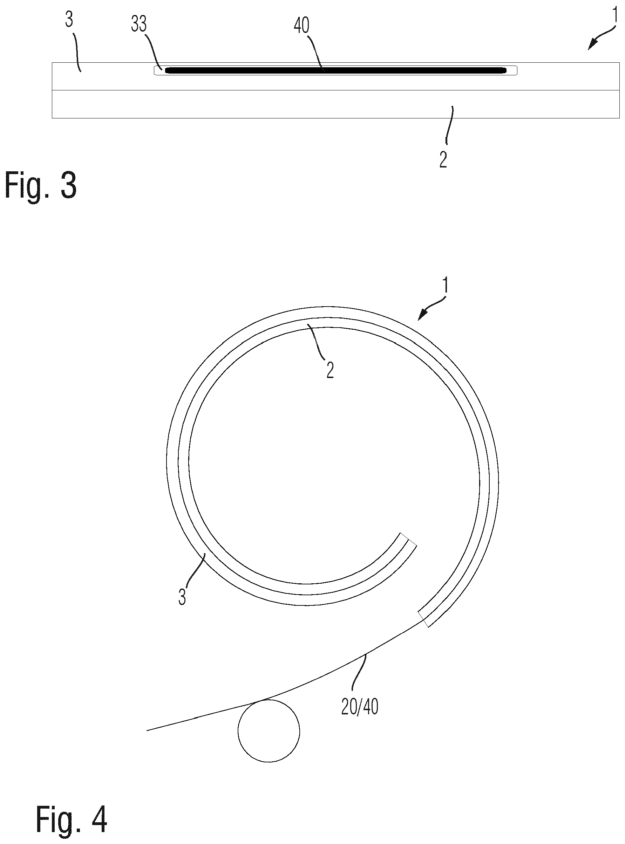

Anhand der Figur 3 wird nochmals der Aufbau des flächigen Trägers 3 näher erläutert. Figur 3 zeigt dabei einen Schnitt durch den Strahlungsdetektor 1.

Wie aus Figur 3 ersichtlich ist, enthält der flächige Träger 3 einen Hohlraum 33, welcher bei Krümmung des flächigen Trägers 3 innerhalb der neutralen Faser des flächigen Trägers 3 verläuft. Im Hohlraum 33, welcher komplementär zur Außenkontur der ersten Wellenleiter 40 geformt sein kann, sind die ersten Wellenleiter 40 gleitend aufgenommen, sodass diese bei Bewegung des flächigen Trägers 3 spannungsarm im Hohlraum 33 gleiten. Hierdurch erfasst das Bragg-Gitter lediglich die Verformung des flächigen Trägers 3, ohne dass die Signale durch unerwünschte mechanische Spannungen oder Temperaturänderungen des ersten Wellenleiter 40 verfälscht wird.

Wie Figur 3 ebenfalls zeigt, befindet sich zwischen dem flächigen Träger 3 und der Formerfassungseinrichtung 4 keine Klebstoffschicht, sodass die Sensitivität der Formerfassungseinrichtung 4 nicht negativ beeinflusst wird.

Aus Figur 4 ist nochmals ersichtlich, dass der Strahlungsdetektor 1 so gebogen werden kann, dass sich die Strahlungserfassungseinrichtung 2 und der flächige Träger 3 an die Form einer Außenfläche anpassen. Zumindest ein Übertragungskanal, beispielsweise die optischen Fasern 20 und 40, dienen zur Übertragung der Signale der Strahlungserfassungseinrichtung und der Formerfassungseinrichtung zur Auswerteeinrichtung. Die neutrale Faser des flächigen Trägers bleibt dabei unverändert.

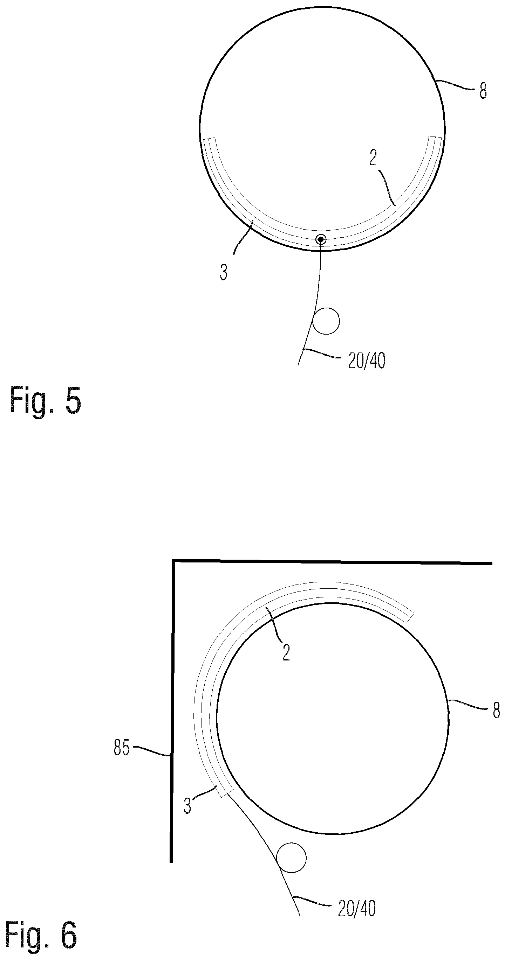

Anhand der Figur 5 wird ein Anwendungsbeispiel des erfindungsgemäßen Strahlungsdetektors 1 erläutert. Im dargestellten Ausführungsbeispiel wird ein Rohr bzw. eine Pipeline 8 untersucht. Diese Pipelines sind aus Stahl oder Kunststoff hergestellt und weisen einen Innendurchmesser zwischen etwa 100 mm und etwa 1300 mm auf. Das Rohr 8 kann als Erdleitung in einer Tiefe von etwa 0,9 m bis etwa 1,8 m vergraben sein.

Nach dem Stand der Technik wird zur Kontrolle der Rohrwandung des Rohres 8 ein planer Strahlungsdetektor eingesetzt. Oftmals wird eine Mehrzahl planer Detektoren zu einem hexagonalen Querschnitt zusammengesetzt. Dieses Vorgehen weist jedoch den Nachteil auf, dass der Detektor unter einigen Erfassungswinkeln blind ist oder zumindest eine reduzierte Auflösung aufweist.

Der erfindungsgemäße Strahlungsdetektor kann in das Innere einer Rohrleitung 8 eingelegt werden und passt sich dem Querschnitt des Rohres 8 an. Die Strahlungserfassungseinrichtung 2 kann nun Strahlung empfangen, welche in Abhängigkeit der Materialeigenschaften der Rohrwandung ihre Eigenschaften ändert. Hierzu kann beispielsweise γ-Strahlung oder Röntgenstrahlung oder auch Myon-Strahlung verwendet werden, welche natürlicherweise in der Atmosphäre entsteht. Zur leichteren Signalauswertung kann die Anschlussleitung 40 bzw. 20 außerhalb der Rohrleitung 8 geführt werden.

Anhand der Figur 6 wird ein zweites Anwendungsbeispiel näher erläutert. Figur 6 zeigt ebenfalls eine Rohrleitung 8, welche in einem Installationsschacht 85 verläuft. Der Bauraum zwischen der Außenwand der Rohrleitung 8 und der Wandung 85 des Installationsschachtes ist begrenzt. Daher wäre eine Untersuchung mit bekannten, planen Strahlungsdetektoren 2 nicht oder nur mit erheblichem Aufwand möglich.

Der erfindungsgemäße Strahlungsdetektor 1 kann sich der Außenkontur des Rohres 8 anpassen und auf diese Weise den Zustand der Wandung des Rohres 8 zuverlässig erfassen. Auch in diesem Fall kann zur Untersuchung der Rohrleitung 8 Röntgenstrahlung, γ-Strahlung oder Myon-Strahlung verwendet werden, welche in Abhängigkeit der Eigenschaften der Rohrwandung verändert und vom Strahlungsdetektor 1 nachgewiesen wird. Gleichzeitig erfasst die Formerfassungseinrichtung des flächigen Trägers 3 die Form der Außenwandung der Rohrleitung 8.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

Das Projekt, das zu diesem Schutzrecht geführt hat, wurde durch das Forschungs- und Innovationsprogramm Horizont 2020 der Europäischen Union im Rahmen der Finanzhilfevereinbarung Nr. 899634 gefördert.

## Patentansprüche

1. Strahlungsdetektor (1) mit zumindest einer Strahlungserfassungseinrichtung (2) und mit zumindest einem flächigen Träger (3), auf welchem die Strahlungserfassungseinrichtung (2) befestigt ist, wobei der flächige Träger (3) in zumindest einer Raumrichtung flexibel ist und eine Formerfassungseinrichtung (4) enthält, welche dazu eingerichtet ist, die Form des flächigen Trägers (3) zu erfassen, wobei
die Formerfassungseinrichtung (4) zumindest einen ersten Wellenleiter (40) enthält, in welchen zumindest ein Bragg-Gitter eingebracht ist, wobei der erste Wellenleiter (40) in den flächigen Träger (3) eingebettet ist, **dadurch gekennzeichnet, dass** der erste Wellenleiter (40) in einem Hohlraum (33) des flächigen Trägers (3) gleitend geführt ist.

2. Strahlungsdetektor nach Anspruch 1, **dadurch gekennzeichnet, dass** der flächige Träger (3) in zwei Raumrichtungen flexibel ist.

3. Strahlungsdetektor nach Anspruch 1 oder 2, **dadurch gekennzeichnet, dass** der erste Wellenleiter (40) außerhalb einer neutralen Faser des flächigen Trägers (3) verläuft.

4. Strahlungsdetektor nach einem der Ansprüche 1 bis 3, **dadurch gekennzeichnet, dass** der Hohlraum (33) zur Außenkontur des ersten Wellenleiters (40) komplementär geformt ist.

5. Strahlungsdetektor nach einem der Ansprüche 1 bis 4, **dadurch gekennzeichnet, dass** die Strahlungserfassungseinrichtung (2) eine Mehrzahl zweiter optischer Wellenleiter (20) enthält, welche zumindest teilweise mit einem Szintillator versehen sind.

6. Strahlungsdetektor nach einem der Ansprüche 1 bis 5, weiterhin enthaltend eine Auswerteeinrichtung (13), welcher Signale der Strahlungserfassungseinrichtung (2) und der Formerfassungseinrichtung (4) zuführbar sind und welche dazu eingerichtet ist, die durch die Krümmung des flächigen Trägers (3) hervorgerufenen Signalfehler zu korrigieren.

7. Strahlungsdetektor nach einem der Ansprüche 1 bis 6, **dadurch gekennzeichnet, dass** die Strahlungserfassungseinrichtung (2) mehrlagig ausgeführt ist.

8. Verfahren zur Erfassung von Strahlung mit einem Strahlungsdetektor (1) mit zumindest einer Strahlungserfassungseinrichtung (2) und mit zumindest einem flächigen Träger (3), auf welchem die Strahlungserfassungseinrichtung (2) befestigt ist, wobei der flächige Träger (3) in zumindest einer Raumrichtung flexibel ist und eine Formerfassungseinrichtung (4) enthält, welche dazu eingerichtet ist, die Form des flächigen Trägers (3) zu erfassen, und die Formerfassungseinrichtung (4) zumindest einen ersten Wellenleiter (40) enthält, in welchen zumindest ein Bragg-Gitter eingebracht ist, wobei der erste Wellenleiter (40) in den flächigen Träger (3) eingebettet ist, **dadurch gekennzeichnet, dass** der erste Wellenleiter (40) in einem Hohlraum (33) des flächigen Trägers (3) gleitend geführt ist.

9. Verfahren nach Anspruch 8, **dadurch gekennzeichnet, dass** die Signale der Formerfassungseinrichtung (4) genutzt werden, um die durch die Krümmung des flächigen Trägers (3) hervorgerufenen Signalfehler der Strahlungserfassungseinrichtung (2) zu korrigieren.

10. Verfahren nach einem der Ansprüche 8 oder 9, **dadurch gekennzeichnet, dass** die Form des flächigen Trägers durch ein neuronales Netz oder durch geometrische Interpolation bestimmt wird.

11. Verfahren nach einem der Ansprüche 8 bis 10, **dadurch gekennzeichnet, dass** der Strahlungsdetektor (1) gerollt oder gefaltet durch eine Öffnung zum Messort transportiert und am Messort entfaltet oder entrollt wird.

12. Verfahren nach einem der Ansprüche 8 bis 10, **dadurch gekennzeichnet, dass** der Strahlungsdetektor (1) an die Form eines Messobjektes (6) angepasst wird.

13. Verfahren nach einem der Ansprüche 8 bis 12, **dadurch gekennzeichnet, dass** die Strahlung von der Strahlungserfassungseinrichtung (2) in ein oder zwei Raumdimensionen ortsaufgelöst erfasst wird.

14. Verfahren nach einem der Ansprüche 8 bis 13, **dadurch gekennzeichnet, dass** die Strahlung ausgewählt ist aus Gammastrahlung und/oder Röntgenstrahlung und/oder Myon-strahlung.

## Claims

1. Radiation detector (1) comprising at least one radiation detection device (2) and at least one flat carrier (3) on which the radiation detection device (2) is mounted, the flat carrier (3) being flexible in at least one spatial direction and containing a shape detection device (4) which is designed to detect the shape of the flat carrier (3), the shape detection device (4) containing at least one first waveguide (40) in which at least one Bragg grating is incorporated, the first waveguide (40) being embedded in the flat carrier (3), **characterized in that** the first waveguide (40) is guided in a sliding manner in a cavity (33) of the flat carrier (3).

2. Radiation detector according to claim 1, **characterized in that** the flat carrier (3) is flexible in two spatial directions.

3. Radiation detector according to claim 1 or 2, **characterized in that** the first waveguide (40) runs outside a neutral fiber of the flat carrier (3).

4. Radiation detector according to any one of claims 1 to 3, **characterized in that** the cavity (33) is shaped so as to be complementary to the outer contour of the first waveguide (40).

5. Radiation detector according to any one of claims 1 to 4, **characterized in that** the radiation detection device (2) contains a plurality of second optical waveguides (20) which are at least partially provided with a scintillator.

6. Radiation detector according to any one of claims 1 to 5, further comprising an evaluation device (13) to which signals from the radiation detection device (2) and the shape detection device (4) can be supplied and which is designed to correct the signal errors caused by the curvature of the flat carrier (3).

7. Radiation detector according to any one of claims 1 to 6, **characterized in that** the radiation detection device (2) is designed to have multiple layers.

8. Method for detecting radiation using a radiation detector (1) with at least one radiation detection device (2) and with at least one flat carrier (3) on which the radiation detection device (2) is mounted, the flat carrier (3) being flexible in at least one spatial direction and containing a shape detection device (4) which is designed to detect the shape of the flat carrier (3), and the shape detection device (4) containing at least one first waveguide (40) in which at least one Bragg grating is incorporated, the first waveguide (40) being embedded in the flat carrier (3), **characterized in that** the first waveguide (40) is guided in a sliding manner in a cavity (33) of the flat carrier (3).

9. Method according to claim 8, **characterized in that** the signals of the shape detection device (4) are used to correct the signal errors of the radiation detection device (2) that are caused by the curvature of the flat carrier (3).

10. Method according to any one of claims 8 or 9, **characterized in that** the shape of the flat carrier is determined by a neural network or by geometric interpolation.

11. Method according to any one of claims 8 to 10, **characterized in that** the radiation detector (1) is transported in rolled or folded fashion through an opening to the measuring location and unfolded or unrolled at the measuring location.

12. Method according to any one of claims 8 to 10, **characterized in that** the radiation detector (1) is adapted to the shape of a measurement object (6).

13. Method according to any one of claims 8 to 12, **characterized in that** the radiation is detected by the radiation detection device (2) in one or two spatial dimensions in a spatially resolved manner.

14. Method according to any one of claims 8 to 13, **characterized in that** the radiation is selected from gamma radiation and/or X-ray radiation and/or muon radiation.

## Revendications

1. Détecteur de rayonnement (1) comprenant au moins un dispositif de détection de rayonnement (2) et au moins un support surfacique (3) sur lequel est fixé le dispositif de détection de rayonnement (2), le support surfacique (3) étant flexible dans au moins une direction dans l'espace et comprenant un dispositif de détection de forme (4) qui est conçu pour détecter la forme du support surfacique (3), le dispositif de détection de forme (4) comprenant au moins un premier guide d'ondes (40) dans lequel est intégré au moins un réseau de Bragg, le premier guide d'ondes (40) étant noyé dans le support surfacique (3),
**caractérisé en ce que** le premier guide d'ondes (40) est guidé en glissement dans une cavité (33) du support surfacique (3).

2. Détecteur de rayonnement selon la revendication 1,
**caractérisé en ce que** le support surfacique (3) est flexible dans deux directions dans l'espace.

3. Détecteur de rayonnement selon la revendication 1 ou 2,
**caractérisé en ce que** le premier guide d'ondes (40) s'étend à l'extérieur d'une fibre neutre du support surfacique (3).

4. Détecteur de rayonnement selon l'une des revendications 1 à 3, **caractérisé en ce que** la cavité (33) est de forme complémentaire au contour extérieur du premier guide d'ondes (40).

5. Détecteur de rayonnement selon l'une des revendications 1 à 4, **caractérisé en ce que** le dispositif de détection de rayonnement (2) comprend une pluralité de seconds guides d'ondes optiques (20) qui sont pourvus au moins en partie d'un scintillateur.

6. Détecteur de rayonnement selon l'une des revendications 1 à 5, comprenant en outre un dispositif d'évaluation (13) auquel peuvent être transmis les signaux du dispositif de détection de rayonnement (2) et du dispositif de détection de forme (4) et qui est conçu pour corriger les erreurs de signal causées par la courbure du support surfacique (3).

7. Détecteur de rayonnement selon l'une des revendications 1 à 6, **caractérisé en ce que** le dispositif de détection de rayonnement (2) est conçu en plusieurs couches.

8. Procédé de détection de rayonnement à l'aide d'un détecteur de rayonnement (1) comprenant au moins un dispositif de détection de rayonnement (2) et au moins un support surfacique (3) sur lequel est fixé le dispositif de détection de rayonnement (2), le support surfacique (3) étant flexible dans au moins une direction dans l'espace et comprenant un dispositif de détection de forme (4) qui est conçu pour détecter la forme du support surfacique (3), et le dispositif de détection de forme (4) comprenant au moins un premier guide d'ondes (40) dans lequel est intégré au moins un réseau de Bragg, le premier guide d'ondes (40) étant noyé dans le support surfacique (3),
**caractérisé en ce que** le premier guide d'ondes (40) est guidé en glissement dans une cavité (33) du support surfacique (3).

9. Procédé selon la revendication 8,
**caractérisé en ce que** les signaux du dispositif de détection de forme (4) sont utilisés pour corriger les erreurs de signal du dispositif de détection de rayonnement (2) causées par la courbure du support surfacique (3).

10. Procédé selon l'une des revendications 8 ou 9,
**caractérisé en ce que** la forme du support surfacique est déterminée par un réseau neuronal ou par interpolation géométrique.

11. Procédé selon l'une des revendications 8 à 10,
**caractérisé en ce que** le détecteur de rayonnement (1) est transporté à l'état enroulé ou plié vers le lieu de mesure à travers une ouverture, et est déplié ou déroulé au lieu de mesure.

12. Procédé selon l'une des revendications 8 à 10,
**caractérisé en ce que** le détecteur de rayonnement (1) est adapté à la forme d'un objet à mesurer (6).

13. Procédé selon l'une des revendications 8 à 12,
**caractérisé en ce que** le rayonnement est détecté par le dispositif de détection de rayonnement (2) dans une ou deux dimensions dans l'espace avec une résolution spatiale.

14. Procédé selon l'une des revendications 8 à 13,
**caractérisé en ce que** le rayonnement est choisi parmi le rayonnement gamma et/ou le rayonnement X et/ou le rayonnement muonique.
